# FASCICULE DE BREVET EUROPEEN

(11) **EP 3 849 854 B1**
(45) Date de publication et mention de la délivrance du brevet: **31.08.2022**
(21) Numéro de dépôt: 19758794.2
(22) Date de dépôt: 15.07.2019
(51) Int. Cl.: B60R 25/20

(54) **SYSTÈME AUTOMATIQUE D'ACCÈS ET DE DÉMARRAGE POUR VÉHICULE AUTOMOBILE ET PROCÉDÉ DE GESTION DE L'ACCÈS À UN VÉHICULE**
AUTOMATISCHES ZUGANGS- UND STARTSYSTEM FÜR EIN KRAFTFAHRZEUG UND VERFAHREN ZUM VERWALTEN DES ZUGANGS ZU EINEM FAHRZEUG
AUTOMATIC ACCESS AND STARTING SYSTEM FOR MOTOR VEHICLE AND METHOD FOR MANAGING ACCESS TO A VEHICLE

(30) Priorité: 10.09.2018 FR 1858085
(43) Date de publication de la demande: 21.07.2021
(73) Titulaire: PSA Automobiles SA, 78300 Poissy (FR)
(72) Inventeur: MICHEL, Stephane, 90150 FOUSSEMAGNE (FR); SAUVAGEOT, Sebastien, 25200 MONTBELIARD (FR); LEROY, Nicolas, 90000 BELFORT (FR)
(86) Numéro de dépôt international: PCT/FR2019/051764
(87) Numéro de publication internationale: WO 2020/053491

(56) Documents cités:
- EP-A2- 2 631 880
- WO-A1-2010/057902
- US-A1- 2014 320 260
- US-A1- 2015 235 494

## Description

L'invention se rapporte au domaine de la gestion de l'accès à un véhicule automobile. Plus précisément, l'invention concerne un système automatique d'accès et de démarrage de véhicule automobile ainsi qu'un procédé de gestion de l'accès à un véhicule automobile.

On connaît des véhicules automobiles qui comportent un système d'accès et de démarrage sans intervention manuelle, couramment dénommé « accès et démarrage mains libres ». Un tel système permet de réaliser le déverrouillage des portières et/ou d'autres dispositifs de sécurité anti-vol du véhicule automobile, sans intervention manuelle de l'utilisateur. Pour cela, l'utilisateur est muni d'un identifiant, tel qu'une clé ou une carte électronique, couramment dénommé « identifiant mains libres », qui permet à une unité de commande du déverrouillage du véhicule automobile de reconnaître l'utilisateur autorisé, lorsque cet utilisateur est à proximité d'une porte du véhicule automobile et, généralement, lorsque l'utilisateur actionne la poignée d'ouverture ou plus généralement tout dispositif de commande d'ouverture extérieure de la porte.

L'identifiant peut être constitué par exemple par une carte électronique ou un émetteur fournissant un code d'identification qui doit être reconnu par l'unité de commande de déverrouillage du véhicule automobile pour permettre la manœuvre de déverrouillage.

Généralement, le système automatique d'accès et de démarrage comporte des moyens de détection de l'identifiant mains libres, dans une zone à l'intérieur de l'habitacle du véhicule automobile et dans plusieurs zones situées au moins partiellement à l'extérieur du véhicule automobile, par exemple au voisinage des portières du véhicule et au voisinage de la partie arrière du véhicule. Ainsi, le système automatique d'accès et de démarrage est apte à reconnaitre un identifiant à l'approche de son porteur, et de déverrouiller le véhicule.

Des fonctions autres que le déverrouillage peuvent également être mises en œuvre, telles que le démarrage du véhicule ou l'ajustement de réglages personnalisés (hauteur et position du siège conducteur, etc.), ou encore l'allumage des phares et d'un ou plusieurs projecteurs formant un éclairage dit « éclairage d'accueil ».

Pour mettre en œuvre ces fonctionnalités au mieux, il est requis que le véhicule soit apte à détecter un identifiant (et donc son porteur) lorsqu'il pénètre à l'intérieur d'au moins une zone (virtuellement) délimitée autour du véhicule. Pour permettre la mise en oeuvre de fonctionnalités évoluées, il est avantageux que plusieurs zones soient délimitées autour du véhicule, ces zones étant plus ou moins restreintes et englobant chacune le véhicule.

La détection d'un identifiant mains libres repose sur un protocole d'échange d'informations entre le véhicule et l'identifiant, permettant de confirmer que celui-ci est un identifiant autorisé. Ainsi, le système automatique d'accès et de démarrage émet à intervalles réguliers un signal d'interrogation, dans l'attente d'une réponse de la part d'un identifiant (procédé généralement connu sous le nom anglais de « polling »). Lorsqu'un identifiant capte le signal d'interrogation émis par un véhicule, il émet une réponse à ce signal qui permet au véhicule de localiser l'identifiant dans un premier temps. Des échanges complémentaires ont ensuite lieu entre le véhicule et l'identifiant afin de réaliser une authentification forte et d'autoriser, ou non, l'accès au véhicule.

Ces échanges de données entre le véhicule et l'identifiant présentent l'inconvénient d'empêcher la prise en compte d'une commande effectuée par le porteur de l'identifiant, par l'intermédiaire du (ou des) bouton(s) de commande présent(s) sur l'identifiant. Or, les répétitions du signal d'interrogation peuvent être émises de façon très rapprochée, deux émissions pouvant par exemple être séparées d'un intervalle de seulement 300 millisecondes. Dans ce contexte, la probabilité qu'une commande effectuée par le porteur d'un identifiant ait lieu pendant une communication entre le véhicule et l'identifiant est très élevée. Or, on ne connait pas actuellement de système automatique d'accès et démarrage qui puisse gérer simultanément une communication à des fins d'authentification d'un identifiant et le traitement d'une commande effectuée par le porteur de cet identifiant.

La présente invention a pour but de remédier aux inconvénients de l'état de la technique, et plus particulièrement ceux ci-dessus exposés, en proposant un système d'accès et de démarrage mains libres qui permette une authentification forte d'un identifiant mains libres tout en gérant les commandes effectuées par le porteur de cet identifiant pendant les phases d'échanges de données nécessaires à l'authentification.

On connait par le document US2015/235494 un appareil pour gérer la séquence de réponse avec élimination géométrique d'une pluralité de télécommandes sans clé. Les télécommandes sont interrogées avec un module de commande de carrosserie.

On connait aussi par le document WO2010057902 un système de communication pour véhicule automobile comprenant : un récepteur logé dans le véhicule automobile, ledit récepteur comportant au moins deux canaux de réception, chaque canal étant apte à recevoir une information émise à une fréquence radio déterminée, au moins un émetteur apte à transmettre au moins une information.

On connait aussi par le document EP2631880 un circuit de type émetteur-récepteur chargeant sans fil des dispositifs portables, tels que des téléphones portables via des signaux sans fil, et communiquant également sans fil des données avec des transpondeurs distants.

À cet effet, l'invention concerne un système automatique d'accès et de démarrage pour un véhicule automobile, comportant un système de gestion d'accès embarqué et au moins un identifiant tel qu'une clé électronique, le système de gestion d'accès étant configuré pour détecter et authentifier l'identifiant lorsqu'il est à proximité du véhicule, l'identifiant étant configuré pour émettre un signal d'authentification en réponse à un signal d'interrogation émis par le système de gestion et d'accès, l'identifiant comportant une mémoire pour stocker une instruction relative une commande effectuée par le porteur de l'identifiant si cette commande est effectuée durant la phase de détection et d'authentification par le système embarqué, ladite instruction étant stockée temporairement afin que l'identifiant puisse émettre un signal relatif à ladite commande lorsque la phase de détection et d'authentification est terminée.

Ainsi, en incluant au moins un identifiant mains libres apte à mémoriser toute commande qui serait effectuée par le porteur de cet identifiant durant l'émission ou la réception de signaux nécessaires à la détection, à l'identification et à l'authentification de l'identifiant, le système automatique d'accès et de démarrage conforme à l'invention permet d'éviter au porteur d'avoir à réitérer sa commande. En effet, une instruction relative à cette commande est stockée dans une mémoire de l'identifiant, puis celle-ci est transmise au système de gestion d'accès embarqué dans le véhicule, immédiatement après la fin des communications relatives à la phase de détection et d'authentification de l'identifiant. Ainsi, on évite au porteur de l'identifiant d'avoir l'impression que sa commande n'a pas été prise en compte, et on évite que le système puisse être perçu comme défaillant.

Dans une réalisation, le système de gestion et d'accès est configuré pour activer une fonction telle qu'un éclairage d'accueil si l'identifiant est détecté à l'intérieur d'une première zone englobant le véhicule, dite zone d'accueil.

Dans une réalisation, le système de gestion d'accès est configuré pour déverrouiller le véhicule si l'identifiant est détecté à l'intérieur d'une deuxième zone englobant le véhicule, dite zone de déverrouillage.

Dans une réalisation, la zone de déverrouillage est plus restreinte que la zone d'accueil.

Dans une réalisation, le système de gestion d'accès est configuré pour verrouiller le véhicule si l'identifiant est détecté comme ayant quitté une troisième zone englobant le véhicule, dite zone de verrouillage.

Dans une réalisation, la zone de verrouillage est plus restreinte que la zone d'accueil, et/ou plus étendue que la zone de déverrouillage.

L'invention concerne également un procédé de gestion de l'accès à un véhicule automobile comportant un système de gestion d'accès, le procédé incluant une procédure de détection et d'authentification d'un identifiant comportant les étapes suivantes :
- stockage, dans une mémoire de l'identifiant, d'une instruction relative à une commande effectuée par le porteur de l'identifiant durant la procédure de détection et d'authentification ;
- émission par l'identifiant d'un signal relatif à ladite commande lorsque la procédure de détection et d'authentification est terminée.

Dans une réalisation, la procédure de détection et d'authentification comporte les étapes suivantes :
- émission par le système de gestion d'accès d'un premier signal d'interrogation ;
- réception par l'identifiant du premier signal d'interrogation et émission par l'identifiant d'un signal de localisation.

Dans une réalisation, la procédure de détection et d'authentification comporte en outre les étapes suivantes :
- émission par le système de gestion d'accès d'un deuxième signal d'interrogation ;
- réception par l'identifiant du deuxième signal d'interrogation et émission par l'identifiant d'un signal d'authentification.

Dans une réalisation, la procédure de détection et d'authentification comporte une étape d'authentification du signal d'authentification émis par l'identifiant.

L'invention concerne également un véhicule automobile comportant un système automatique d'accès et de démarrage pour un véhicule automobile tel que défini plus haut et/ou mettant en œuvre un procédé tel que défini ci-dessus.

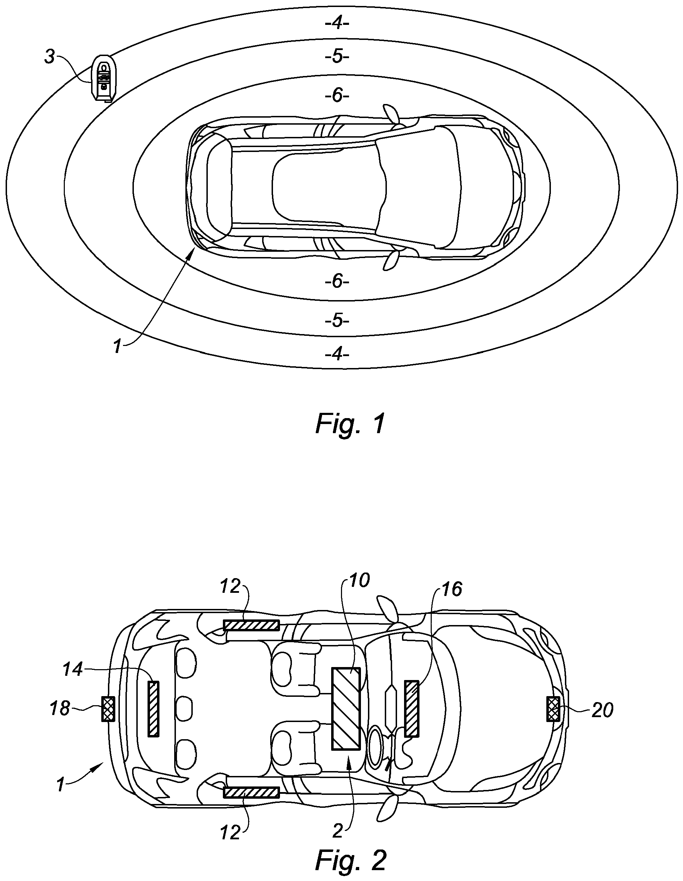

La présente invention sera mieux comprise à la lecture de la description détaillée qui suit, faite en référence aux dessins annexés, dans lesquels les figures 1 et 2 représentent un véhicule comportant un système automatique d'accès et de démarrage conforme à l'invention.

Les figures 1 et 2 représentent un véhicule 1 automobile, le véhicule 1 étant équipé d'un système automatique d'accès et de démarrage conforme à l'invention, qui comporte un système de gestion d'accès 2 embarqué et un ou plusieurs identifiants 3 mains libres, tels qu'une clé électronique. Le système de gestion d'accès 2 est configuré pour détecter un identifiant 3 situé à proximité du véhicule 1. L'identifiant 3 est un appareil électronique portable, tel qu'une clé électronique, une carte électronique, etc. Le système de gestion d'accès 2 est configuré pour déterminer la distance et/ou la position de l'identifiant 3 par rapport au véhicule 1, et pour authentifier cet identifiant 3, c'est-à-dire reconnaitre cet identifiant comme étant autorisé (car associé à ce véhicule particulier). Plus précisément, le système de gestion d'accès est apte à déterminer si l'identifiant 3 (et donc son porteur) se trouve dans une zone déterminée englobant le véhicule, pour procéder à son authentification, et, si celle-ci est confirmée, à activer une ou plusieurs fonctions telles que le déverrouillage du véhicule.

Le système de gestion d'accès 2 comporte un module de communication 10 sans fil, apte à échanger, via une liaison sans fil, des données avec un appareil électronique portable tel qu'une clé électronique, une carte électronique, tel que la clé électronique 3 représentée sur la figure 1.

Le système de gestion d'accès 2 comporte une pluralité d'antennes disposées dans différentes zones du véhicule 1. Avantageusement, comme montré sur la figure 2, le véhicule comporte au moins quatre antennes déportées par rapport au module de communication 10 : deux antennes latérales 12 (disposées de chaque côté du véhicule, par exemple dans une porte latérale), une antenne arrière 14 (disposée par exemple à proximité de la lunette arrière), et une antenne avant 16 (disposée par exemple à proximité du pare-brise). Cet ensemble de quatre antennes peut avantageusement être complété par une ou plusieurs antennes supplémentaires, dans l'exemple deux antennes supplémentaires 18, 20 disposées respectivement dans les pare-chocs arrière et avant.

Dans l'exemple des figures, l'ensemble des antennes déportées décrites ci-dessus est de type basse fréquence. Chaque antenne est apte à émettre à intervalles réguliers un premier signal d'interrogation qui lui est propre. Lorsque ce premier signal d'interrogation est capté par un identifiant mains libres tel que l'identifiant 3, ce dernier émet en retour un signal de localisation, dans l'exemple un signal haute fréquence, que le module de communication 10 peut recevoir au moyen d'une antenne haute fréquence interne. Le signal de localisation reçu de l'identifiant permet au système de gestion d'accès de localiser l'identifiant 3, c'est-à-dire de déterminer que celui-ci se trouve à proximité du véhicule, et plus précisément quelle est la position de l'identifiant 3, en fonction de l'antenne déportée dont l'identifiant est le plus proche.

Le système de gestion d'accès 2 émet alors ensuite un deuxième signal d'interrogation. Lorsque l'identifiant 3 capte ce deuxième signal d'interrogation, l'identifiant 3 émet en réponse un signal d'authentification qui permet au système de gestion d'accès 2 d'authentifier l'identifiant, c'est-à-dire de le reconnaitre comme étant un identifiant autorisé.

Le système de gestion d'accès 2 est ainsi apte à détecter toute pénétration d'un identifiant 3 autorisé (et donc de son porteur) à l'intérieur d'une zone délimitée autour du véhicule, et, en réponse à cette détection, à commander l'activation d'une ou plusieurs fonctions telles que le déverrouillage du véhicule 1.

Dans l'exemple, le système de gestion d'accès 2 est apte à déterminer la position de l'identifiant de l'identifiant 3 (et donc son porteur) par rapport à plusieurs zones englobant le véhicule et se recouvrant partiellement.

Ainsi, le système de gestion d'accès 2 est apte à déterminer si l'identifiant 3 se situe à l'intérieur d'une première zone englobant le véhicule, dite zone d'accueil 4. Le bord de la zone d'accueil 4, dans l'exemple de forme globalement elliptique, se situe par exemple à une distance du véhicule comprise entre 2 et 4 mètres, et notamment égale à environ 3 mètres. La détection d'un identifiant 3 autorisé dans cette première zone peut par exemple déclencher l'activation d'une fonction d'éclairage d'accueil. Cette activation implique notamment l'allumage des phares du véhicule 1 et de différents projecteurs d'appoint, tels que des projecteurs permettant d'éclairer le sol à proximité des portes du véhicule.

Le système de gestion d'accès est également apte à déterminer si l'identifiant 3 se trouve dans une ou plusieurs zone(s) particulière(s) en plus de la zone d'accueil 4. Par exemple, comme visible sur la figure 1, il est prévu deux zones plus restreintes que la zone d'accueil 4 et englobant elles aussi le véhicule 1. La zone la plus restreinte est une zone de déverrouillage 6, zone dans laquelle la détection de l'identifiant 3 aboutit au déverrouillage du véhicule. Le bord de la zone de déverrouillage 6, dans l'exemple de forme globalement elliptique, se situe par exemple à une distance du véhicule comprise entre 0,5 et 1,5 mètre. La zone intermédiaire, qui est dans l'exemple plus retreinte que la zone d'accueil 4 mais plus étendue que la zone de déverrouillage 6, constitue une zone de verrouillage 5. La détection de l'identifiant 3 sortant de la zone de verrouillage 5 alors que le véhicule est déverrouillé (par exemple après l'arrêt du véhicule ou après que l'identifiant 3 ait été détecté dans la zone de déverrouillage 6), a pour effet que le système de gestion d'accès 2 commande le verrouillage du véhicule. Le bord de la zone verrouillage 5, dans l'exemple de forme globalement elliptique, se situe par exemple à une distance du véhicule comprise entre 1,5 et 2,5 mètres.

Bien entendu, on pourra prévoir une zone unique constituant par exemple une zone de déverrouillage et/ou une zone de verrouillage. On pourra également prévoir deux zones ou plus.

Ainsi qu'expliqué plus haut, le système de gestion d'accès 2 met en oeuvre une procédure de détection et d'authentification de l'identifiant main libre. Un tel protocole implique des échanges de données entre le système de gestion d'accès 2 et l'identifiant 3. Ainsi, le système de gestion d'accès émet à intervalles réguliers un premier signal d'interrogation, à un intervalle relativement long afin de ne pas consommer trop d'énergie, par exemple toutes les 1200 millisecondes. Lorsqu'un identifiant est détecté, un deuxième signal d'interrogation peut être émis à intervalles significativement plus courts, par exemple toutes les 300 millisecondes.

Conformément à l'invention, tant que les échanges de données relatifs à la détection et à l'authentification de l'identifiant 3 ne sont pas terminés, l'identifiant 3 est en mesure de stocker toute commande effectuée par son porteur, par appui sur l'un des boutons de commande équipant l'identifiant 3. Ces boutons de commande servent à différentes fonctions, parmi lesquelles le verrouillage et le déverrouillage du véhicule, et éventuellement l'ouverture du coffre ou l'allumage des feux de croisement. Ainsi, si le porteur d'un identifiant effectue un appui sur l'un ou l'autre des boutons de commande de l'identifiant durant la phase de détection et d'authentification, la commande correspondante sera mémorisée par l'identifiant 3. En effet, une instruction relative à cette commande sera stockée temporairement dans une mémoire de l'identifiant 3, le temps que les échanges de données relatifs à la détection et l'authentification de l'identifiant soient finis. L'instruction stockée sera ensuite émise par l'identifiant après la fin de ces échanges, afin que la commande correspondante soit prise en compte par le système de gestion d'accès 2 du véhicule. Ainsi le porteur de l'identifiant ne sera pas contraint de réitérer sa commande jusqu'à ce que celle-ci ait un effet, et n'aura donc pas l'impression d'une défaillance de l'identifiant ou du véhicule.

## Revendications

1. Système automatique d'accès et de démarrage pour un véhicule automobile, comportant un système de gestion d'accès (2) embarqué et au moins un identifiant (3) tel qu'une clé électronique, le système de gestion d'accès étant configuré pour détecter et authentifier l'identifiant (3) lorsqu'il est à proximité du véhicule (1), l'identifiant (3) étant configuré pour émettre un signal d'authentification en réponse à un signal d'interrogation émis par le système de gestion et d'accès, l'identifiant (3) comportant une mémoire pour stocker une instruction relative une commande effectuée par le porteur de l'identifiant (3) si cette commande est effectuée durant la phase de détection et d'authentification par le système embarqué, ladite instruction étant stockée temporairement afin que l'identifiant puisse émettre un signal relatif à ladite commande lorsque la phase de détection et d'authentification est terminée.

2. Système automatique d'accès et de démarrage selon la revendication précédente, dans lequel le système de gestion et d'accès (2) est configuré pour activer une fonction telle qu'un éclairage d'accueil si l'identifiant est détecté à l'intérieur d'une première zone englobant le véhicule, dite zone d'accueil (4).

3. Système automatique d'accès et de démarrage selon la revendication précédente, dans lequel le système de gestion d'accès (2) est configuré pour déverrouiller le véhicule si l'identifiant (3) est détecté à l'intérieur d'une deuxième zone englobant le véhicule, dite zone de déverrouillage (6), la zone de déverrouillage (6) étant par exemple plus restreinte que la zone d'accueil (4).

4. Système automatique d'accès et de démarrage selon la revendication précédente, dans lequel le système de gestion d'accès (2) est configuré pour verrouiller le véhicule si l'identifiant (3) est détecté comme ayant quitté une troisième zone englobant le véhicule, dite zone de verrouillage (5), la zone de verrouillage (5) étant par exemple plus restreinte que la zone d'accueil (4) et/ou plus étendue que la zone de déverrouillage (6).

5. Procédé de gestion de l'accès à un véhicule (1) automobile comportant un système de gestion d'accès, le procédé incluant une procédure de détection et d'authentification d'un identifiant (3) comportant les étapes suivantes :
- stockage, dans une mémoire de l'identifiant, d'une instruction relative à une commande effectuée par le porteur de l'identifiant durant la procédure de détection et d'authentification ;
- émission par l'identifiant d'un signal relatif à ladite commande lorsque la procédure de détection et d'authentification est terminée.

6. Procédé selon la revendication précédente, dans lequel la procédure de détection et d'authentification comporte les étapes suivantes :
- émission par le système de gestion d'accès d'un premier signal d'interrogation ;
- réception par l'identifiant du premier signal d'interrogation et émission par l'identifiant d'un signal de localisation.

7. Procédé selon la revendication précédente, dans lequel la procédure de détection et d'authentification comporte en outre les étapes suivantes :
- émission par le système de gestion d'accès d'un deuxième signal d'interrogation ;
- réception par l'identifiant du deuxième signal d'interrogation et émission par l'identifiant d'un signal d'authentification.

8. Procédé selon la revendication précédente, dans lequel la procédure de détection et d'authentification comporte une étape d'authentification du signal d'authentification émis par l'identifiant.

9. Véhicule (1) automobile comportant un système automatique d'accès et de démarrage pour un véhicule automobile selon l'une des revendication 1 à 4 et/ou mettant en œuvre un procédé conforme à l'une des revendications 5 à 8.

## Patentansprüche

1. Automatisches Zugangs- und Startsystem für ein Kraftfahrzeug, das ein bordeigenes Zugangsverwaltungssystem (2) und mindestens eine Kennung (3) wie einen elektronischen Schlüssel umfasst, wobei das Zugangsverwaltungssystem so konfiguriert ist, dass es die Kennung (3) erfasst und authentifiziert, wenn sie sich in der Nähe des Fahrzeugs (1) befindet, wobei die Kennung (3) so konfiguriert ist, dass sie als Reaktion auf ein vom Verwaltungs- und Zugangssystem gesendetes Abfragesignal ein Authentifizierungssignal aussendet, wobei der Identifikator (3) einen Speicher umfasst, um eine Anweisung zu speichern, die sich auf einen vom Träger des Identifikators (3) ausgeführten Befehl bezieht, wenn dieser Befehl während der Erfassungs- und Authentifizierungsphase durch das Bordsystem ausgeführt wird, wobei die Anweisung temporär gespeichert wird, damit der Identifikator ein Signal aussenden kann, das sich auf den Befehl bezieht, wenn die Erfassungs- und Authentifizierungsphase abgeschlossen ist.

2. Automatisches Zugangs- und Startsystem nach dem vorhergehenden Anspruch, bei dem das Verwaltungs- und Zugangssystem (2) so konfiguriert ist, dass es eine Funktion wie eine Begrüßungsbeleuchtung aktiviert, wenn die Kennung innerhalb einer ersten, das Fahrzeug umfassenden Zone, der sogenannten Begrüßungszone (4), erfasst wird.

3. Automatisches Zugangs- und Startsystem nach dem vorhergehenden Anspruch, wobei das Zugangsverwaltungssystem (2) so konfiguriert ist, dass es das Fahrzeug entriegelt, wenn die Kennung (3) innerhalb einer zweiten, das Fahrzeug umfassenden Zone, der sogenannten Entriegelungszone (6), erfasst wird, wobei die Entriegelungszone (6) beispielsweise kleiner als die Empfangszone (4) ist.

4. Automatisches Zugangs- und Startsystem nach dem vorhergehenden Anspruch, wobei das Zugangsverwaltungssystem (2) so konfiguriert ist, dass es das Fahrzeug verriegelt, wenn festgestellt wird, dass die Kennung (3) einen dritten, das Fahrzeug umfassenden Bereich, den sogenannten Sperrbereich (5), verlassen hat, wobei der Sperrbereich (5) beispielsweise enger als der Aufnahmebereich (4) und/oder weiter als der Entriegelungsbereich (6) ist.

5. Verfahren zur Verwaltung des Zugangs zu einem Kraftfahrzeug (1) mit einem Zugangsverwaltungssystem, wobei das Verfahren ein Verfahren zur Erfassung und Authentifizierung eines Identifikators (3) mit den folgenden Schritten umfasst:
- Speichern einer Anweisung in einem Speicher des Identifikators, die sich auf einen Befehl bezieht, der vom Träger des Identifikators während des Erfassungs- und Authentifizierungsverfahrens ausgeführt wird ;
- Aussenden eines Signals durch den Identifikator, das sich auf den genannten Befehl bezieht, wenn das Erfassungs- und Authentifizierungsverfahren abgeschlossen ist.

6. Verfahren nach dem vorhergehenden Anspruch, wobei das Erkennungs- und Authentifizierungsverfahren die folgenden Schritte umfasst:
- Senden eines ersten Abfragesignals durch das Zugangsverwaltungssystem ;
- Empfang des ersten Abfragesignals durch den Identifikator; und Senden eines Lokalisierungssignals durch den Identifikator.

7. Verfahren nach dem vorhergehenden Anspruch, wobei das Erkennungs- und Authentifizierungsverfahren zusätzlich die folgenden Schritte umfasst:
- Senden eines zweiten Abfragesignals durch das Zugangsverwaltungssystem ;
- Empfangen des zweiten Abfragesignals durch die Kennung; und Senden eines Authentifizierungssignals durch die Kennung.

8. Verfahren nach dem vorhergehenden Anspruch, bei dem das Verfahren zur Erkennung und Authentifizierung einen Schritt zur Authentifizierung des von der Kennung gesendeten Authentifizierungssignals umfasst.

9. Kraftfahrzeug (1) mit einem automatischen Zugangs- und Startsystem für ein Kraftfahrzeug nach einem der Ansprüche 1 bis 4 und/oder zur Durchführung eines Verfahrens nach einem der Ansprüche 5 bis 8.

## Claims

1. Automatic access and starting system for a motor vehicle, comprising an on-board access management system (2) and at least one identifier (3) such as an electronic key, the access management system being configured to detect and authenticate the identifier (3) when it is in the vicinity of the vehicle (1), the identifier (3) being configured to emit an authentication signal in response to an interrogation signal emitted by the access management system, **characterized in that** the identifier (3) comprising a memory for storing an instruction relating to a command carried out by the bearer of the identifier (3) if this command is carried out during the detection and authentication phase by the on-board system, the said instruction being stored temporarily so that the identifier can emit a signal relating to the said command when the detection and authentication phase is over.

2. The automatic access and start system according to the preceding claim, wherein the access and management system (2) is configured to activate a function such as a welcome light if the identifier is detected inside a first area encompassing the vehicle, said welcome area (4).

3. The automatic access and start system according to the preceding claim, wherein the access management system (2) is configured to unlock the vehicle if the identifier (3) is detected within a second area encompassing the vehicle, referred to as the unlocking area (6), the unlocking area (6) being for example more restricted than the reception area (4).

4. The automatic access and start system according to the preceding claim, wherein the access management system (2) is configured to lock the vehicle if the identifier (3) is detected to have left a third area encompassing the vehicle, the so-called lock area (5), the lock area (5) being for example more restricted than the welcome area (4) and/or larger than the unlock area (6).

5. Method for managing access to a motor vehicle (1) comprising an access management system, the method including a procedure for detecting and authenticating an identifier (3) comprising the following steps:
- storage, in a memory of the identifier, of an instruction relating to a command carried out by the bearer of the identifier during the detection and authentication procedure;
- transmission by the identifier of a signal relating to the said command when the detection and authentication procedure is completed.

6. A method according to the preceding claim, wherein the detection and authentication procedure comprises the following steps:
- transmission by the access management system of a first interrogation signal ;
- receiving by the identifier the first interrogation signal and transmitting by the identifier a location signal.

7. A method according to the preceding claim, wherein the detection and authentication procedure further comprises the following steps:
- transmission by the access management system of a second interrogation signal ;
- receiving by the identifier the second interrogation signal and transmitting by the identifier an authentication signal.

8. The method according to the preceding claim, wherein the detecting and authenticating procedure comprises a step of authenticating the authentication signal transmitted by the identifier.

9. Motor vehicle (1) comprising an automatic access and starting system for a motor vehicle according to any of claims 1 to 4 and/or implementing a method according to any of claims 5 to 8.
